# EUROPÄISCHE PATENTSCHRIFT

(11) **EP 2 443 791 B1**
(45) Veröffentlichungstag und Bekanntmachung des Hinweises auf die Patenterteilung: **13.06.2018**
(21) Anmeldenummer: 10715542.6
(22) Anmeldetag: 23.04.2010
(51) Int. Cl.: H04L 12/10, H01R 31/08, H01R 12/71, H04L 12/40

(54) **VERBINDUNGSELEMENT ZUM ANSCHLUSS EINER DATENLIEFEREINHEIT AN EINEN VERBINDUNGSSTRANG UND VERBINDUNGSSTRANG ZUR DIREKTEN DATEN- UND INDIREKTEN ENERGIEÜBERTRAGUNG**
CONNECTING ELEMENT FOR CONNECTING A DATA SUPPLY UNIT TO A CONNECTING STRAND
ÉLÉMENT DE LIAISON POUR RACCORDER UNE UNITÉ DE FOURNITURE DE DONNÉES À UN CÂBLE DE LIAISON

(30) Priorität: 18.06.2009 DE 102009027020
(43) Veröffentlichungstag der Anmeldung: 25.04.2012
(73) Patentinhaber: Robert Bosch GmbH, 70442 Stuttgart (DE)
(72) Erfinder: SEITER, Michael, 71735 Eberdingen-Hochdorf (DE); SCHNEIDER, Michael, 76307 Karlsbad (DE); RAPPS, Peter, 76227 Karlsruhe (DE)
(86) Internationale Anmeldenummer: PCT/EP2010/055464
(87) Internationale Veröffentlichungsnummer: WO 2010/145872

(56) Entgegenhaltungen:
- US-A- 4 487 464
- US-A- 5 797 757
- US-B1- 6 309 244

## Beschreibung

### Stand der Technik

Die vorliegende Erfindung bezieht sich auf eine Sensoreinheit gemäß Anspruch 1 und ein Verbindungssystem gemäß Anspruch 4.

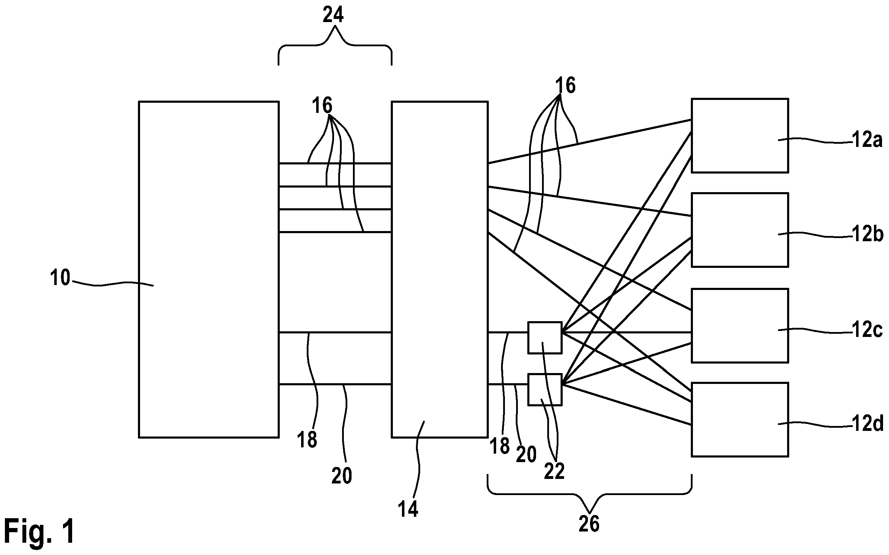

Beispielsweise in einem System der Rückfahr- oder Einparkhilfe werden meist ein Steuergerät und mehrere (insbesondere 2 bis 12 oder mehr) Ultraschall-Sensoren eingesetzt. Es werden dabei aber auch Systeme eingesetzt, bei denen das Steuergerät nicht als einzelnes, separates Steuergerät ausgeführt ist, sondern bei denen die Steuergerätefunktion in einem Zentralsteuergerät integriert ist, das mehrere Funktionen bedient. Eine in diesen Fällen übliche Verkabelung ist in Fig. 1 am Beispiel von 4 Sensoren dargestellt, wobei eine solche Verdrahtung dem Stand der Technik entspricht.

In einem solchen in Fig. 1 dargestellten System werden von einer zentralen Datenverarbeitungseinheit 10 beispielsweise die einzelnen im Fahrzeug verbauten (Ultraschall-) Sensoren 12a, 12b, 12c und 12d angebunden. Diese Anbindung erfolgt beispielsweise über einen Zwischenstecker oder einen Kabelbaum 14 wobei über diesen Kabelbaum 14 die einzelnen Datenleitungen 16 zur Übertragung und der Daten der Sensoren 12 an die Datenverarbeitungseinheit 10 geführt werden. Zugleich kann über den Zwischenstecker oder Kabelbaum 14 ebenfalls die Energieversorgung der Sensoren 12 erfolgen, wobei in diesem Fall von der Datenverarbeitungseinheit 10 eine erste Versorgungsleitung 18 (beispielsweise zur Führung eines positiven Potentials) und eine zweite Versorgungsleitung 20 (beispielsweise zur Führung eines Massepotentials) zum Kabelbaum 14 vorgesehen
ist. Die über die beiden Versorgungsleitungen 18 und 20 zur Verfügung gestellte Energie zum Betrieb der Sensoren kann nach dem Zwischenstecker 14 ein einem Versorgungsstrang 26 durch entsprechendes Spleiße 22 auf- bzw. verteilt werden, so dass jeder der Sensoren 12a bis 12d eine eigene Energieversorgungsanbindung über die Spleiße 22 an die entsprechenden Energieversorgungsleitungen 18 und 20 hat.

Jeder Sensor 12 ist auf diese Weise mit dem Steuergerät über drei Leitungen verbunden: beispielsweise der Plusversorgung 18, der Masseleitung 20 und der (bidirektionalen) Datenleitung 16. Da sich die Sensoren 12 meist im Stoßfänger befinden, ist aus Montagegründen ein Zwischenstecker 14 zwischen Steuergerät 10 (ECU) und Sensoren 12 (USS) vorgesehen, der einen Body- Kabelbaum 24 mit dem Stoßfänger-Kabelbaum 26 (als Verbindungsstrang zur Anbindung der einzelnen Sensoren 12) verbindet. Häufig werden die beiden Versorgungsleitungen im Body-Kabelbaum 24 für alle Sensoren 12 gemeinsam geführt und erst nach dem Zwischenstecker 14 mit den Spleißen 22 auf die einzelnen Sensoren 12 aufgespleißt. Das verbilligt den Stecker 14, erfordert aber auch Zusatzaufwand durch das Vorsehen der Spleiße 22.

Die Datenleitungen werden sowohl im Body-Kabelbaum 24 als auch im Stoßfänger-Kabelbaum 26 für jeden Sensor 12 separat geführt.

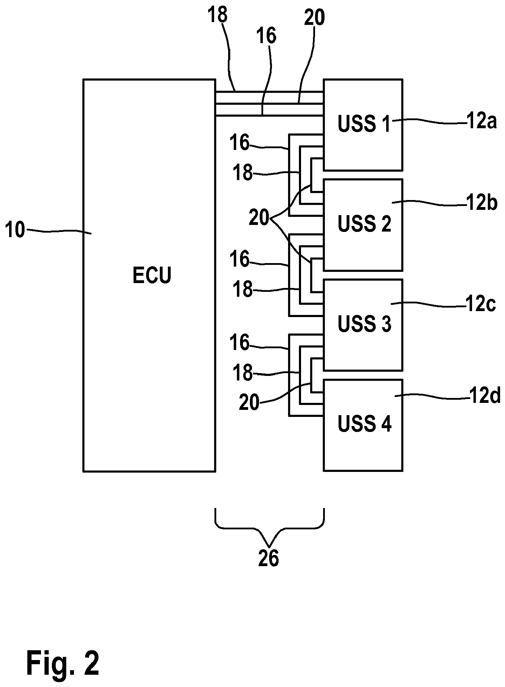

Alternativ dazu sind inzwischen Systeme auf dem Markt, die die Sensoren über einen Datenbus mit dem Steuergerät verbinden. Wegen der problematischen geometrischen Adressierung der Sensoren (das Steuergerät muss wissen, welcher Sensor wo im Stoßfänger sitzt) sind diese Systeme in Daisy-Chain-Anordnung ausgeführt. Eine solche Anordnung ist in Fig. 2 unter Verwendung eines Steuergeräts 10 sowie vier Sensoren 12a-d beispielhaft dargestellt.

Gemäß dieser Daisy-Chain-Anordnung werden von dem Steuergerät 10, das eine Datenverarbeitungseinheit (ECU) bildet, eine Datenleitung 16, eine erste Versorgungsleitung 18 und eine zweite Versorgungsleitung 20 zu einem ersten (beispielsweise Ultraschall-) Sensor 12a (USS1) geführt. Vom ersten Sensor 12a wird in Serienschaltung die Datenleitungen 16, die erste und zweite Versorgungsleitung 18 und 20 zu einem zweiten (beispielsweise wiederum Ultraschall-) Sensor 12b (USS2) geführt. Unter einer Serienschaltung ist dabei nicht eine Reihenschaltung zu verstehen; vielmehr kann die Serienschaltung auch als eine Parallelschaltung des ersten und zweiten Sensors (USS1 und USS2) ausgebildet sein, wobei allerdings bei einem Wegfall des ersten Sensors 12a eine Kommunikation zwischen dem Steuergerät 10 und den zweiten Sensor 12b dann nicht mehr möglich ist. Auf analoge Weise kann ein dritter Sensor 12c (USS3) in Serienschaltung mit dem zweiten Sensor 12b verschaltet werden und ein vierter Sensor 12d (USS4) in Serienschaltung mit dem dritten Sensor 12c verschaltet werden.

In der Druckschrift WO 2007/059772 A2 wird eine weitere Möglichkeit offenbart, wie eine direkte sequenzielle Netzwerkadressierung zwischen einem Netzwerk-Server und mehreren Netzwerk-Clients möglich ist. Dabei wird ein Ansatz vorgestellt, wie die Netzwerk-Clients nacheinander über eine gemeinsame Datenleitung initialisiert werden. Die Dokumente US 4487464 A, US 5797757 A und US 6309244 B1 offenbaren Verbindungselemente für die Anwendung bei Leiterplatten.

### Offenbarung der Erfindung

Vor diesem Hintergrund wird mit der vorliegenden Erfindung eine Sensoreinheit gemäss des unabhängigen Anspruchs 1 vorgestellt. Vorteilhafte Ausgestaltungen ergeben sich aus den jeweiligen Unteransprüchen und der nachfolgenden Beschreibung.

Ein Verbindungselement zum Anschluss einer Datenliefereinheit an einen Verbindungsstrang, weist folgende Merkmale auf:
- eine erste Schnittstelle, die aus zumindest einem ersten, zweiten, dritten, vierten und fünften Kontaktanschluss besteht, welche von außerhalb des Verbindungselementes kontaktierbar sind; wobei der erste und zweite Kontaktanschluss elektrisch leitfähig miteinander verbunden oder verbindbar sind und wobei der vierte und fünfte Kontaktanschluss elektrisch leitfähig miteinander verbunden oder verbindbar sind;
- eine zweite Schnittstelle zur Energieversorgung der Datenliefereinheit und zur Datenweiterleitung der Daten der Datenliefereinheit, wobei die zweite Schnittstelle aus zumindest einem ersten, zweiten und dritten Verbindungskontakt besteht und wobei der erste Verbindungskontakt zur Energieversorgung der Datenliefereinheit vorgesehen und mit dem ersten und/oder zweiten Kontaktanschluss verbunden ist, der zweite Verbindungskontakt zur Datenweiterleitung vorgesehen und mit dem dritten Kontaktanschluss verbunden ist und der dritte Verbindungskontakt zur Energieversorgung der Datenliefereinheit vorgesehen und mit dem vierten und/oder fünften Kontaktanschluss verbunden ist.

Ein Verbindungsstrang zur Versorgung einer Mehrzahl von Datenliefereinheiten mit elektrischer Energie und zur Verbindung der Mehrzahl der Datenliefereinheiten mit einer Datenverarbeitungseinheit weist folgende Merkmale auf:
- eine erste Datenleitung, die zur direkten Datenübertragung zwischen einer ersten Datenliefereinheit und der Datenverarbeitungseinheit ausgebildet ist;
- eine zweite Datenleitung, die zur direkten Datenübertragung zwischen einer zweiten Datenliefereinheit und der Datenverarbeitungseinheit ausgebildet ist,
- Energieversorgungsleitungen zur Energieversorgung zumindest der ersten und zweiten Datenliefereinheit bei deren Betrieb, wobei die Energieversorgungsleitungen in einer Serienschaltung derart konfiguriert sind, dass die Energie zum Betrieb der ersten und zweiten Datenliefereinheit von einem Energieversorgungsanschluss zunächst an eine Schnittstelle für die erste Datenliefereinheit übertragen wird und die Energie zum Betrieb der zweiten Datenliefereinheit über die Schnittstelle der ersten Datenliefereinheit an eine Schnittstelle für die zweite Datenliefereinheit weitergeleitet wird, sodass eine direkte Energieversorgung der zweiten Datenliefereinheit von dem Energieversorgungsanschluss ohne die Schnittstelle der ersten Datenliefereinheit ausgeschlossen ist.

Die Erfindung schafft ein Verbindungssystem zur Anbindung einer Mehrzahl von Datenliefereinheiten an eine Datenverarbeitungseinheit, wobei das Verbindungssystem zumindest folgende Merkmale umfasst:
- die Datenverarbeitungseinheit;
- eine erste Datenliefereinheit mit einem Verbindungselement gemäß einem der;
- eine zweite Datenliefereinheit mit einem Verbindungselement gemäß einem der vorstehend genannte Ausführungsformen;
- einem Verbindungsstrang gemäß einem der vorstehend genannten Ausführungsformen, zur Versorgung der zumindest ersten und zweiten Datenliefereinheit mit elektrischer Energie und zur Übertragung von Daten der zumindest ersten und zweiten Datenliefereinheit an die Datenverarbeitungseinheit.

Ein Verfahren zur Versorgung einer Mehrzahl von Datenliefereinheiten mit elektrischer Energie und zur Verbindung der Mehrzahl der Datenliefereinheiten mit einer Datenverarbeitungseinheit, weist die folgenden Schritte auf:
- Direktes Übertragen von Daten einer ersten Datenliefereinheit an die Datenverarbeitungseinheit;
- Direktes Übertragen von Daten einer zweiten Datenliefereinheit an die Datenverarbeitungseinheit;
- Empfangen von elektrischer Energie zum Betrieb der ersten und zweiten Datenliefereinheiten durch eine Schnittstelle der ersten Datenliefereinheit von einem Energieversorgungsanschluss; und
- Weiterleiten der empfangenen Energie zum Betrieb der zweiten Datenliefereinheit von der Schnittstelle der ersten Datenliefereinheit an eine Schnittstelle der zweiten Datenliefereinheit, sodass eine direkte Energieversorgung der zweiten Datenliefereinheit ohne die Schnittstelle der ersten Datenliefereinheit von dem Energieversorgungsanschluss ausgeschlossen ist.

Die vorliegende Erfindung basiert auf der Erkenntnis, dass eine schnelle und wenig störungsanfällige Übertragung von Daten von mehreren Datenliefereinheiten (wie beispielsweise Sensoren) an einen Steuergerät oder auch eine Datenverarbeitungseinheit dann möglich ist, wenn eine direkte Datenleitung zwischen diesen Datenliefereinheiten und der Datenverarbeitungseinheit vorgesehen wird. Auf diese Weise entfällt eine aufwändige Adressierung der Daten der jeweiligen Datenliefereinheiten. Zugleich kann jedoch die Energieversorgung der einzelnen Datenliefereinheiten in einer "Daisy-Chain-Anordnung" erfolgen, so dass sich ein Verkabelungsaufwand für die Energieversorgung der einzelnen Datenliefereinheiten reduzieren lässt. Um eine solche Daisy-Chain-Anordnung zu implementieren, sollte ein entsprechender Verbindungsstrang und geeignete Verbindungselemente im Bereich der Datenliefereinheiten vorgesehen werden. Beispielsweise könnten die Verbindungselemente im Bereich der Datenliefereinheiten fünf externe zugängliche Kontakte aufweisen, wobei einer dieser Kontakte für die Datenübertragung zwischen der Datenliefereinheit und dem Steuergerät vorgesehen ist, zwei weitere dieser Kontakte zu Energieaufnahme und nochmals zwei weitere dieser Kontakte zur Energieweiterleitung vorgesehen sind, wobei ein Kontakt zu Energieaufnahme mit einem Kontakt zur Energieweiterleitung und der andere Kontakt zur Energieaufnahme mit dem anderen Kontakte zur Energieweiterleitung verbunden oder zumindest verbindbar sind.

Die vorliegende Erfindung bietet den Vorteil, dass keine Änderung oder Konfiguration der bisher eingesetzten Steuergeräte oder Datenliefereinheiten (Sensoren) erforderlich ist. Vielmehr braucht lediglich ein Zwischenstecker, speziell das genannte Verbindungselement, und ein entsprechend ausgestalteter Verbindungsstrang vorgesehen werden. Der Zwischenstecker in Form des Verbindungselements lässt sich jedoch als einfaches und kostengünstiges Bauelement fertigen. Der entsprechende Verbindungsstrang kann ebenfalls einfach und kostengünstig bereitgestellt werden, da einerseits weniger Leitungen zur Energieversorgung an der einzelnen Datenliefereinheiten vorzusehen sind und ferner die Spleiße gemäß dem Stand der Technik entfallen können. Dies führt zu einer vorteilhaften Reduktion der Kosten für die Anbindung des Steuergeräts an die entsprechenden Datenliefereinheiten. Auch braucht eine aufwändige Umadressierung der Daten in den jeweiligen Datenliefereinheiten nicht erfolgen, da die Daten der Datenliefereinheiten direkt, das heißt nicht über eine Busverbindung, an das Steuergerät übertragen werden. Dies ermöglicht auch die erforderliche Elektronik in den Datenliefereinheiten einfach zu halten.

In einer günstigen Ausführungsform der Erfindung kann die erste Schnittstelle eine Metallverbindung zwischen dem ersten und zweiten Kontaktanschluss und eine weitere Metallverbindung zwischen dem vierten und fünften Kontaktanschluss aufweisen, wobei die Metallverbindungen insbesondere in einem Bereich der Kontaktanschlüsse angeordnet sind, der von außerhalb des Verbindungselementes kontaktierbar ist. Eine derartige Ausführungsform des Verbindungselements bietet den Vorteil, dass durch das Vorsehen der Metallverbindungen zwischen dem ersten und zweiten Kontaktanschluss und dem vierten und fünften Kontaktanschluss die entsprechende Daisy-Chain-Anordnung für die Energieversorgung der einzelnen Datenliefereinheiten sehr einfach realisierbar wird. Eine aufwändige Schaltverbindung zwischen diesen Kontaktanschlüssen kann damit entfallen.

Auch kann in einer weiteren Ausführungsform der Erfindung der erste und vierte Kontaktanschluss der ersten Schnittstelle zur Energieaufnahme von Energie zum Betrieb der Datenliefereinheit ausgebildet sein und der zweite und fünfte Kontaktanschluss der ersten Schnittstelle zur Energieweiterleitung von Energie zum Betrieb einer weiteren Datenliefereinheit ausgebildet sein. Dies bietet den Vorteil, dass die entsprechenden Kontaktanschlüsse entsprechend dimensioniert werden können und damit auch die Weiterleitung einer ausreichenden Energie zum Betrieb für in Serienschaltung nachfolgend angeordnete Datenliefereinheiten gewährleistet ist.

Insbesondere kann auch eine Sensoreinheit vorgesehen sein, die
- ein Verbindungselement gemäß einer der vorstehend beschriebenen Ausführungsformen; und
- ein Sensorelement für ein Fahrzeug, insbesondere einen Ultraschallsensor, zur Lieferung von Sensordaten umfasst, wobei der Sensor mittels des ersten und dritten Verbindungskontakts mit Energie versorgbar ist und wobei das Sensorelement ausgebildet ist, um Sensordaten über den zweiten Verbindungskontakt an eine Datenverarbeitungseinheit auszugeben.

Eine derartige Ausführungsform der vorliegenden Erfindung bietet den Vorteil, dass die Erfindung konkret für Fahrzeugsensoren einsetzbar ist, in der ein hoher Kostendruck eine möglichst günstige Anbindungsstruktur erfordert. Ferner kann auch durch den Entfall der aufwändigen Umadressierung eine Datenübertragungssicherheit gewährleistet werden, die insbesondere bei der Übertragung von sicherheitskritischen Signalen (beispielsweise für die Airbag-Auslösung) wesentlich ist.

Auch können die Energieversorgungsleitungen ausgebildet sein, um die Energie zum Betrieb der zumindest ersten und zweiten Datenliefereinheit von der Datenverarbeitungseinheit einer Schnittstelle für die erste Datenliefereinheit bereitzustellen. Dies bietet den Vorteil, dass die Datenverarbeitungseinheit die zum Betrieb der Datenliefereinheiten erforderliche Energie über den Verbindungsstrang bereitstellen kann, so dass eine sehr einfache und vollständige Anbindung der Datenliefereinheiten an die Datenverarbeitungseinheit möglich wird, ohne auf andere Kabelstränge oder Versorgungsleitungen zurückgreifen zu müssen.

Die Erfindung wird anhand der beigefügten Zeichnungen beispielhaft näher erläutert. Es zeigen:
- Fig. 1: ein Blockschaltbild einer herkömmlichen Anbindung von Datenliefereinheiten an eine Datenverarbeitungseinheit;
- Fig. 2: ein Blockschaltbild einer weiteren herkömmlichen Anbindung von Datenliefereinheiten an eine Datenverarbeitungseinheit in einer Daisy-Chain-Anordnung;
- Fig. 3: ein Blockschaltbild ersten Ausführungsbeispiels einer Anbindung von Datenliefereinheiten an eine Datenverarbeitungseinheit
- Fig. 4: eine perspektivische Darstellung eines Ausführungsbeispiels der vorliegenden Erfindung als Verbindungselement;
- Fig. 5: eine weitere perspektivische Darstellung des Ausführungsbeispiels der vorliegenden Erfindung als Verbindungselement; und
- Fig. 6: ein Ablaufdiagramm eines Ausführungsbeispiels der vorliegenden Erfindung als Verfahren.

Gleiche oder ähnliche Elemente können in den Figuren durch gleiche oder ähnliche Bezugszeichen versehen sein, wobei auf eine wiederholte Beschreibung dieser Elemente verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung eventuell unter Verwendung von unterschiedlichen Maßen und Dimensionen erläutert, wobei eine Nennung dieser Maße und Dimensionen nicht dahingehend zu verstehen ist, dass die Erfindung auf diese Maße und Dimensionen eingeschränkt zu verstehen ist. In der nachfolgenden Beschreibung wird die Erfindung auch an Hand eines Ausführungsbeispiels als Verfahren beschrieben. Diesbezüglich ist anzumerken, dass die in diesem Ausführungsbeispiel genannten Verfahrensschritte auch in einer anderen Reihenfolge ausgeführt werden können. Auch können in anderen Varianten der Erfindung einzelne Verfahrensschritte des hier beschriebenen Ausführungsbeispiels weggelassen oder modifiziert werden. Somit ist festzustellen, dass sich die in dieser Anmeldung vorgestellte Erfindung nicht ausschließlich auf die nachfolgend beschriebene Abfolge von Verfahrensschritten beschränkt.

Durch die hier vorgestellte Erfindung soll insbesondere eine Lösung aufgezeigt werden, die ermöglicht, auf bestehenden Lösungen zur Datenübertragung aufzubauen, keinen Zusatzaufwand für das Vorsehen eines Datenbus benötigt, aber geeignet ist, beim OEM (Original Equipment Manufacturer = Original-Teilehersteller) Kabelbaumkosten einzusparen, insbesondere die teuren Spleiße im Kabelbaum zu vermeiden.

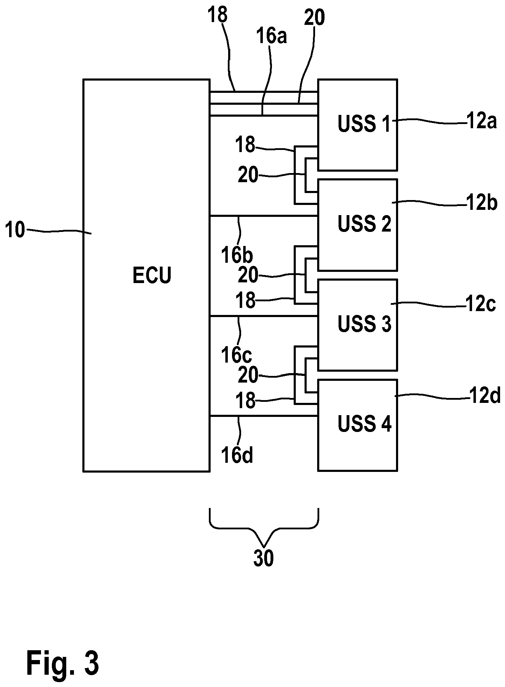

Ein Blockschaltbild eines Ausführungsbeispiels der vorliegenden Erfindung ist in Fig. 3 dargestellt. Dabei werden die Sensoren 12a bis 12d über eine modifizierte Daisy-Chain-Anordnung an das Steuergerät 10 angebunden, wobei jedoch weiterhin zwischen jedem einzelnen Sensor 12 und der ECU 10 eine direkte Verbindung über die Datenleitungen 16a bis 16d besteht, die jeden der Sensoren 12a bis 12d einzeln mit dem Steuergerät 10 verbinden. Es ist also gerade kein Datenbus zur Übertragung der Daten der Sensoren 12 an das Steuergerät 10 vorgesehen, über den alle Daten der Sensoren übertragen werden müssen. Statt der früheren Spleiße 22 jedoch werden jetzt die beiden Versorgungsleitungen (beispielsweise Plus 18 und Masse 20) durch die Sensoren 12 oder vorgeschaltete Verbindungselemente geschleift, die zwischen einen geänderten Verbindungsstrang 30 und die Sensoren 12 geschaltet sind. Jeder Sensor 12 oder das vorgeschaltete Verbindungselement hat jetzt fünf Anschlüsse (zwei für die eingehende Versorgung, zwei für die ausgehende Versorgung des in Serie geschalteten Sensors und eine Datenleitung).

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

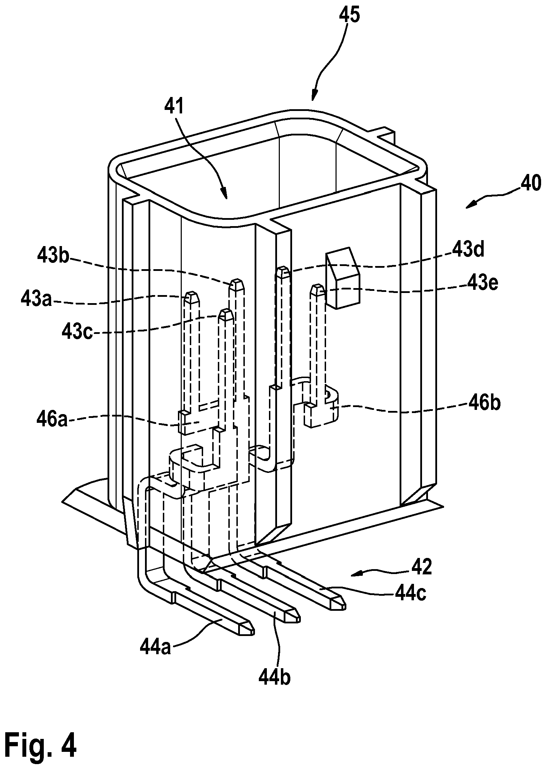

Der Vorteil dieser Lösung ergibt sich vor allem daraus, dass der bestehende technische Standard für das Steuergerät 10 und die Sensoren 12 weitgehend übernommen werden kann. Insbesondere kann die komplette Leiterplatte mit Elektronik und Leiterplattenlayout übernommen werden, wenn die Verdrahtung der Sensorversorgungen direkt im Sensorstecker (d.h. im Verbindungselement 40 zwischen dem Versorgungsstrang 30 und dem eigentlichen Sensor 12) vorgenommen wird. Diese elektrische Verbindung kann sehr leicht, einfach und vorteilhaft ausgeführt werden, wie dies in Fig. 4 gezeigt ist.

In Fig. 4 ist ein erstes Ausführungsbeispiel eines Verbindungselements 40 in perspektivischer Ansicht dargestellt, das eine erste Schnittstelle 41 und eine zweite Schnittstelle 42 aufweist. Die erste Schnittstelle 41 umfasst einen ersten Kontaktanschluss 43a, einen zweiten Kontaktanschluss 43b, einen dritten Kontaktanschluss 43c, einen vierten Kontaktanschluss 43d und einem fünften Kontaktanschluss 43e. Die zweite Schnittstelle 42 weist einen ersten Verbindungskontakt 44a, einen zweiten Verbindungskontakt 44b und einen dritten Verbindungskontakt 44c auf. Die Kontaktanschlüsse 43 der ersten Schnittstelle 41 sind dabei vorzugsweise von außerhalb des Verbindungselements 40 kontaktierbar, beispielsweise durch die Öffnung 45 des Verbindungselementes 40.

Der erste Kontaktanschluss 43a ist dabei über eine Metallverbindung 46a mit dem zweiten Kontaktanschluss 43b verbunden. Auf gleiche Weise ist auch der vierte Kontaktanschluss 43d mit dem fünften Kontaktanschluss 43e über eine weitere Metallverbindung 46b verbunden. Diese Metallverbindungen 46a und 46b stellen eine Brückung der Signale an diesen Kontakten im Steckbereich sicher.

Die erste Schnittstelle 41 ist dabei derart mit der zweiten Schnittstelle 42 gekoppelt, dass der erste und zweite Kontaktanschluss 43a und 43b mit dem ersten Verbindungskontakt 44a elektrisch leitfähig verbunden sind. Der dritte Kontaktanschluss 43c ist mit dem zweiten Verbindungskontakt 44b elektrisch leitfähig verbunden und der dritte Verbindungskontakt 44c ist elektrisch leitfähig mit dem vierten und fünften Kontaktanschluss 43d und 43e verbunden.

Das Verbindungselement 40 kann über die erste Schnittstelle 41 beispielsweise mit einem in Fig. 4 nicht dargestellten Verbindungsstrang 30 kontaktiert werden. Über die zweite Schnittstelle 42 des Verbindungselements 40 kann ein in Fig. 4 ebenfalls nicht dargestellter Sensor 12 oder eine Standard-Leiterplatte kontaktiert werden.

Dabei kann eine Energieversorgung einer an der zweiten Schnittstelle 42 angeschlossenen Datenliefereinheit (beispielsweise der Sensor 12) über den ersten Verbindungskontakt 44a und den dritten Verbindungskontakt 44c erfolgen. In diesem Fall kann die Daisy-Chain-Anordnung bezüglich der Energieversorgung der Datenliefereinheiten 12 über das Verbindungselement 40 derart realisiert werden, dass eine Energiezuführung über den ersten und fünften Kontaktanschluss 43a und 43e erfolgt und die für den Betrieb einer in Serie geschalteten weiteren Datenliefereinheit benötigte Energie über die Metallverbindung 46a und den zweiten Kontaktanschluss 43b sowie die Metallverbindung 46b und den vierten Kontaktanschluss 43d weitergeleitet wird. Eine Übertragung der Daten der Datenliefereinheit kann über den zweiten Verbindungskontakt 44b, den dritten Kontaktanschluss 43c und den (in Fig. 4 nicht dargestellten) Verbindungsstrang 30 an die Datenverarbeitungseinheit 10 erfolgen, ohne dass für diese Datenübertragung ein weiteres Verbindungselement 40 erforderlich ist.

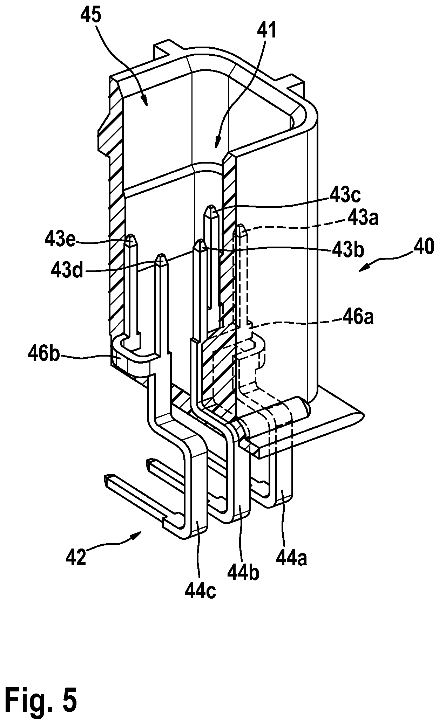

In Fig. 5 ist eine weitere perspektivische Ansicht in Schnittdarstellung des in Fig. 4 gezeigten Ausführungsbeispiels unter einem anderen Blickwinkel wiedergegeben.

Man könnte diese Verbindung, d.h. das in Fig. 4 und Fig. 5 dargestellte Verbindungselement 40 natürlich auch auf einer Leiterplatte bereitstellen, nur würde dies bedeuten, dass man auch noch die Leiterplatte gegenüber dem heutigen Stand ändern müsste.

Insgesamt spart man bei Einsatz des hier vorgestellten Ansatzes gegenüber der herkömmlichen Daisy-Chain-Lösung einen gewissen Elektronikzusatzaufwand. Durch die Verwendung des hier vorgestellten Ansatzes lassen sich insbesondere die Spleiße 22 vermeiden. Der Zusatzaufwand gegenüber der herkömmlichen Lösung besteht im Wesentlichen in einer Änderung des Sensorsteckers und der Veränderung der Leitungsführung im Verbindungsstrang 26, wobei eine Reduktion der erforderlichen Leitungen möglich ist.

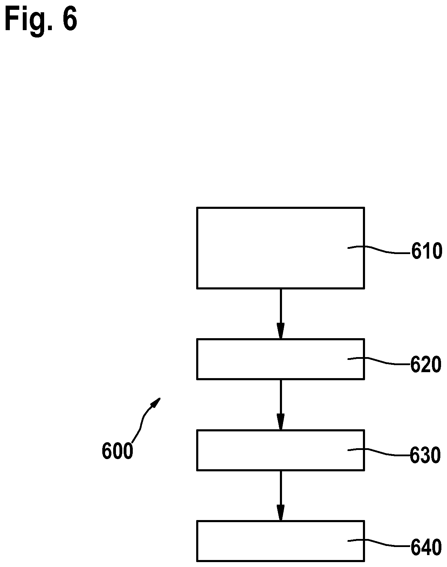

Ferner ist in Fig. 6 ein Ausführungsbeispiel der vorliegenden Erfindung als Verfahren 600 zur Versorgung einer Mehrzahl von Datenliefereinheiten mit elektrischer Energie und zur Verbindung der Mehrzahl der Datenliefereinheiten mit einer Datenverarbeitungseinheit abgebildet, wobei das Verfahren einen Schritt eines direkten Übertragens 610 von Daten einer ersten Datenliefereinheit an die Datenverarbeitungseinheit aufweist. Das Verfahren 600 weist ferner einen weiteren Schritt des direkten Übertragens 620 von Daten einer zweiten Datenliefereinheit an die Datenverarbeitungseinheit auf. Zusätzlich weist das Verfahren einen Schritt des Empfangens 630 von elektrischer Energie zum Betrieb der ersten und zweiten Datenliefereinheiten durch eine Schnittstelle der ersten Datenliefereinheit von einem Energieversorgungsanschluss auf. Außerdem weist das Verfahren und einen Schritt des Weiterleitens 640 der empfangenen elektrischer Energie zum Betrieb der zweiten Datenliefereinheit von der Schnittstelle der ersten Datenliefereinheit an eine Schnittstelle der zweiten Datenliefereinheit, sodass eine direkte Energieversorgung der zweiten Datenliefereinheit von dem Energieversorgungsanschluss ausgeschlossen ist.

## Patentansprüche

1. Sensoreinheit (12) mit einem Verbindungselement (40) zum Anschluss einer Datenliefereinheit (12, USS) an einen Verbindungsstrang (30), wobei das Verbindungselement (40) folgende Merkmale aufweist:
- eine erste Schnittstelle (41), die aus zumindest einem ersten (43a), zweiten (43b), dritten (43c), vierten (43d) und fünften (43e) Kontaktanschluss besteht, welche von außerhalb des Verbindungselementes (40) kontaktierbar sind; wobei der erste (43a) und zweite (43b) Kontaktanschluss elektrisch leitfähig miteinander verbunden oder verbindbar sind und wobei der vierte (43d) und fünfte (43e) Kontaktanschluss elektrisch leitfähig miteinander verbunden oder verbindbar sind;
- eine zweite Schnittstelle (42) zur Energieversorgung der Datenliefereinheit (12, USS) und zur Datenweiterleitung der Daten der Datenliefereinheit (12, USS), wobei die zweite Schnittstelle (42) zumindest einen ersten (44a), zweiten (44b) und dritten (44c) Verbindungskontakt aufweist und wobei der erste Verbindungskontakt (44a) zur Energieversorgung der Datenliefereinheit (12) vorgesehen und mit dem ersten (43a) und/oder zweiten (43b) Kontaktanschluss verbunden ist, der zweite Verbindungskontakt (44b) zur Datenweiterleitung vorgesehen und mit dem dritten (43c) Kontaktanschluss verbunden ist und der dritte(44c) Verbindungskontakt zur Energieversorgung der Datenliefereinheit vorgesehen und mit dem vierten (43d) und/oder fünften (43e) Kontaktanschluss verbunden ist,
und mit einem Sensorelement für ein Fahrzeug, zur Lieferung von Sensordaten, wobei das Sensorelement mittels des ersten (44a) und dritten (44c) Verbindungskontakts mit Energie versorgbar ist und wobei das Sensorelement ausgebildet ist, um Sensordaten über den zweiten Verbindungskontakt (44b) an eine Datenverarbeitungseinheit (10) auszugeben.

2. Sensoreinheit (12) gemäß Anspruch 1, **dadurch gekennzeichnet, dass** die erste Schnittstelle (41) des Verbindungselements (40) eine Metallverbindung (46a) zwischen dem ersten (43a) und zweiten (43b) Kontaktanschluss und eine weitere Metallverbindung (46b) zwischen dem vierten (43d) und fünften (43e) Kontaktanschluss aufweist, wobei die Metallverbindungen (46a, 46b) in einem Bereich der Kontaktanschlüsse (43) angeordnet sind, der von außerhalb des Verbindungselementes (40) kontaktierbar ist.

3. Sensoreinheit (12) gemäß einem der vorhergehenden Ansprüche, **dadurch gekennzeichnet, dass** der erste (43a) und vierte (43d) Kontaktanschluss der ersten Schnittstelle (41) des Verbindungselements (40) zur Energieaufnahme von Energie zum Betrieb der Datenliefereinheit (12a) und einer weiteren Datenliefereinheit (12b) ausgebildet sind und der zweite (43b) und fünfte (43e) Kontaktanschluss der ersten Schnittstelle (41) zur Weiterleitung von Energie zum Betrieb einer weiteren Datenliefereinheit (12b) ausgebildet sind.

4. Verbindungssystem zur Anbindung einer Mehrzahl von Datenliefereinheiten (12) an eine Datenverarbeitungseinheit (10), wobei das Verbindungssystem zumindest folgende Merkmale umfasst:
- die Datenverarbeitungseinheit (10));
- eine erste Sensoreinheit (12a) gemäß einem der Ansprüche 1 bis 3;
- eine zweite Sensoreinheit (12b) gemäß einem der Ansprüche 1 bis 3;
- einen Verbindungsstrang (30) zur Versorgung der ersten und zweiten Sensoreinheit (12a, 12b) mit elektrischer Energie und zur Verbindung der der ersten und zweiten Sensoreinheit (12a, 12b) mit einer Datenverarbeitungseinheit (10 , ECU) zur direkten Übertragung von Daten der zumindest ersten (12a) und zweiten (12b) Sensoreinheit an die Datenverarbeitungseinheit (10),
wobei der Verbindungsstrang (30) zumindest folgende Merkmale aufweist:
- eine erste Datenleitung (16a), die zur direkten Datenübertragung zwischen der ersten Sensoreinheit (12a) und der Datenverarbeitungseinheit (10) ausgebildet ist;
- eine zweite Datenleitung (16b), die zur direkten Datenübertragung zwischen der zweiten Sensoreinheit (12b) und der Datenverarbeitungseinheit (10) ausgebildet ist,
- Energieversorgungsleitungen (18, 20) zur Energieversorgung zumindest der ersten (12a) und zweiten (12b) Sensoreinheit bei deren Betrieb, wobei die Energieversorgungsleitungen (18, 20) in einer Serienschaltung derart konfiguriert sind, dass die Energie zum Betrieb der ersten (12a) und zweiten (12b) Sensoreinheit von einem Energieversorgungsanschluss zunächst an eine Schnittstelle (41) für die erste Sensoreinheit (12a) übertragen wird und die Energie zum Betrieb der zweiten Sensoreinheit (12b) über die Schnittstelle (41) der ersten Sensoreinheit (12a) an eine Schnittstelle (41) für die zweite (12b) Sensoreinheit weitergeleitet wird, sodass eine direkte Energieversorgung der zweiten (12b) Sensoreinheit von dem Energieversorgungsanschluss ohne die Schnittstelle (41) der ersten Sensoreinheit (12a) ausgeschlossen ist.

5. Verbindungssystem (30) gemäß Anspruch 4, **dadurch gekennzeichnet, dass** die Energieversorgungsleitung (18, 20) des Verbindungsstranges (40) ausgebildet ist, um die Energie zum Betrieb der zumindest ersten (12a) und zweiten (12b) Sensoreinheit (12a, 12b) von der Datenverarbeitungseinheit (10) einer Schnittstelle (41) der ersten Sensoreinheit (12a) bereitzustellen.

## Claims

1. Sensor unit (12) having a connecting element (40) for connecting a data supply unit (12, USS) to a connecting section (30), the connecting element (40) having the following features:
- a first interface (41) which comprises at least a first (43a), second (43b), third (43c), fourth (43d) and fifth (43e) contact connection with which contact can be made from outside the connecting element (40), the first (43a) and second (43b) contact connections being connected or being able to be connected to one another in an electrically conductive manner, and the fourth (43d) and fifth (43e) contact connections being connected or being able to be connected to one another in an electrically conductive manner;
- a second interface (42) for supplying energy to the data supply unit (12, USS) and for forwarding the data from the data supply unit (12, USS), the second interface (42) having at least a first (44a), second (44b) and third (44c) connecting contact, and the first connecting contact (44a) being provided for the purpose of supplying energy to the data supply unit (12) and being connected to the first (43a) and/or second (43b) contact connection, the second connecting contact (44b) being provided for the purpose of forwarding data and being connected to the third contact connection (43c), and the third connecting contact (44c) being provided for the purpose of supplying energy to the data supply unit and being connected to the fourth (43d) and/or fifth (43e) contact connection,
and having a sensor element for a vehicle for the purpose of supplying sensor data, the sensor element being able to be supplied with energy by means of the first (44a) and third (44c) connecting contacts, and the sensor element being designed to output sensor data to a data processing unit (10) via the second connecting contact (44b).

2. Sensor unit (12) according to Claim 1, **characterized in that** the first interface (41) of the connecting element (40) has a metal connection (46a) between the first (43a) and second (43b) contact connections and a further metal connection (46b) between the fourth (43d) and fifth (43e) contact connections, the metal connections (46a, 46b) being arranged in a region of the contact connections (43) with which contact can be made from outside the connecting element (40).

3. Sensor unit (12) according to one of the preceding claims, **characterized in that** the first (43a) and fourth (43d) contact connections of the first interface (41) of the connecting element (40) are designed to take in energy for operating the data supply unit (12a) and a further data supply unit (12b), and the second (43b) and fifth (43e) contact connections of the first interface (41) are designed to forward energy for operating a further data supply unit (12b).

4. Connecting system for connecting a plurality of data supply units (12) to a data processing unit (10), the connecting system comprising at least the following features:
- the data processing unit (10);
- a first sensor unit (12a) according to one of Claims 1 to 3;
- a second sensor unit (12b) according to one of Claims 1 to 3;
- a connecting section (30) for supplying the first and second sensor units (12a, 12b) with electrical energy and for connecting the first and second sensor units (12a, 12b) to a data processing unit (10, ECU) for directly transmitting data from the at least first (12a) and second (12b) sensor units to the data processing unit (10),
the connecting section (30) having at least the following features:
- a first data line (16a) which is designed to directly transmit data between the first sensor unit (12a) and the data processing unit (10);
- a second data line (16b) which is designed to directly transmit data between the second sensor unit (12b) and the data processing unit (10),
- energy supply lines (18, 20) for supplying energy at least to the first (12a) and second (12b) sensor units during their operation, the energy supply lines (18, 20) being configured in a series circuit in such a manner that the energy for operating the first (12a) and second (12b) sensor units is first of all transmitted from an energy supply connection to an interface (41) for the first sensor unit (12a) and the energy for operating the second sensor unit (12b) is forwarded to an interface (41) for the second sensor unit (12b) via the interface (41) of the first sensor unit (12a), with the result that a direct energy supply for the second sensor unit (12b) from the energy supply connection without the interface (41) of the first sensor unit (12a) is excluded.

5. Connecting system (30) according to Claim 4, **characterized in that** the energy supply line (18, 20) of the connecting section (40) is designed to provide the energy for operating the at least first (12a) and second (12b) sensor units (12a, 12b) to an interface (41) of the first sensor unit (12a) from the data processing unit (10).

## Revendications

1. Unité à capteur (12) comportant un élément de liaison (40) destiné à raccorder une unité de fourniture de données (12, USS) à un câble de liaison (30), dans lequel l'élément de liaison (40) comporte les éléments caractéristiques suivants :
- une première interface (41) qui est constituée d'au moins une première (43a), une deuxième (43b), une troisième (43c), une quatrième (43d) et une cinquième (43e) bornes de contact avec lesquelles un contact peut être établi depuis l'extérieur de l'élément de liaison (40) ; dans lequel les première (43a) et deuxième (43b) bornes de contact sont ou peuvent être reliées l'une à l'autre de manière électriquement conductrice et dans lequel les quatrième (43d) et cinquième (43e) bornes de contact sont ou peuvent être reliées l'une à l'autre de manière électriquement conductrice ;
- une deuxième interface (42) destinée à l'alimentation en énergie de l'unité de fourniture de données (12, USS) et à la transmission des données de l'unité de fourniture de données (12, USS), dans lequel la deuxième interface (42) comporte au moins un premier (44a), un deuxième (44b), et un troisième (44c) contacts de liaison et dans lequel le premier contact de liaison (44a) est prévu pour l'alimentation en énergie de l'unité de fourniture de données (12) et est relié à la première (43a) et/ou à la deuxième (43b) borne de contact, le deuxième contact de liaison (44b) est prévu pour la retransmission de données et est relié à la troisième borne de contact (43c) et le troisième (44c) contact de liaison est prévu pour l'alimentation en énergie de l'unité de fourniture de données et est relié à la quatrième (43d) et/ou la cinquième (43e) borne de contact, et
comportant un élément capteur destiné à un véhicule et permettant de fournir des données de capteurs, dans lequel l'élément capteur peut être alimenté en énergie au moyen des premier (44a) et troisième (44c) contacts de liaison et dans lequel l'élément capteur est conçu pour délivrer des données de capteurs par l'intermédiaire du deuxième contact de liaison (44b) à une unité de traitement de données (10).

2. Unité à capteur (12) selon la revendication 1, **caractérisée en ce que** la première interface (41) de l'élément de liaison (40) comporte une liaison métallique (46a) entre les première (43a) et deuxième (43b) bornes de contact et une autre liaison métallique (46b) entre la quatrième (43d) et la cinquième (43e) bornes de contact, dans lequel les liaisons métalliques (46a, 46b) sont disposées dans une zone des bornes de contact (43) avec laquelle un contact peut être établi depuis l'extérieur de l'élément de liaison (40).

3. Unité à capteur (12) selon l'une des revendications précédentes, **caractérisée en ce que** les première (43a) et quatrième (43d) bornes de contact de la première interface (41) de l'élément de liaison (40) sont conçues pour prélever de l'énergie destinée au fonctionnement de l'unité de fourniture de données (12a) et d'une autre unité de fourniture de données (12b) et **en ce que** les deuxième (43b) et cinquième (43e) bornes de contact de la première interface (41) sont conçues pour transmettre de l'énergie destinée au fonctionnement d'une autre unité de fourniture de données (12b).

4. Système de liaison destiné à connecter une pluralité d'unités de fourniture de données (12) à une unité de traitement de données (10), dans lequel le système de liaison comprend au moins les éléments caractéristiques suivants :
- l'unité de traitement de données (10) ;
- une première unité à capteur (12a) selon l'une des revendications 1 à 3 ;
- une deuxième unité à capteur (12b) selon l'une des revendications 1 à 3 ;
- un câble de liaison (10) destiné à l'alimentation en énergie électrique des première et deuxième unités à capteur (12a, 12b) et au raccordement des première et deuxième unités à capteur (12a, 12b) à une unité de traitement de données (10, ECU) pour la transmission directe de données des au moins première (12a) et deuxième (12b) unités à capteur à l'unité de traitement de données (10),
dans lequel le câble de liaison (30) comporte au moins les éléments caractéristiques suivants :
- une première ligne de données (16a) qui est conçue pour la transmission directe de données entre la première unité à capteur (12a) et l'unité de traitement de données (10),
- une deuxième ligne de données (16b) qui est conçue pour la transmission de données entre la deuxième unité à capteur (12b) et l'unité de traitement de données (10),
- des lignes d'alimentation en énergie (18, 20) destinées à l'alimentation en énergie d'au moins les première (12a) et deuxième (12b) unités à capteur lors de leur fonctionnement, dans lequel les lignes d'alimentation en énergie (18, 20) sont configurées sous la forme d'un circuit série de manière à ce que l'énergie destinée au fonctionnement de première (12a) et deuxième (12b) unités à capteur par un raccord d'alimentation en énergie soit d'abord transmise à une interface (41) destinée à la première unité à capteur (12a) et à ce que l'énergie destinée au fonctionnement de la deuxième unité à capteur (12b) soit transmise par l'intermédiaire de l'interface (41) de la première unité à capteur (12a) à une interface (41) destinée à la deuxième (12b) unité à capteur, afin qu'une alimentation directe en énergie de la deuxième (12b) unité à capteur par la borne d'alimentation en énergie soit exclue sans l'interface (41) de la première unité à capteur (12a).

5. Système de liaison (30) selon la revendication 4, **caractérisé en ce que** la ligne d'alimentation en énergie (18, 20) du câble de liaison (40) est conçue pour fournir l'énergie destinée au fonctionnement de l'au moins une première (12a) et deuxième (12b) unités à capteur (12a, 12b) par l'unité de traitement de données (10) à une interface (41) de la première unité à capteur (12a).
